# FASCICULE DE BREVET EUROPEEN

(11) **EP 3 740 657 B1**
(45) Date de publication et mention de la délivrance du brevet: **07.09.2022**
(21) Numéro de dépôt: 19703395.4
(22) Date de dépôt: 10.01.2019
(51) Int. Cl.: F16N 31/02, F16H 57/04, F16H 57/08, F02C 7/06, F02C 7/36, F01D 25/18

(54) **COLLECTEUR D'HUILE POUR REDUCTEUR DE VITESSE NOTAMMENT DE TURBOMACHINE, REDUCTEUR DE VITESSE ET TURBOMACHINE ASSOCIÉS**
ÖLSAMMLER FÜR EIN UNTERSETZUNGSGETRIEBE, INSBESONDERE EINER TURBOMASCHINE SOWIE ZUGEHÖRIGES UNTERSETZUNGSGETRIEBE UND TURBOMASCHINE
OIL COLLECTOR FOR SPEED REDUCER, IN PARTICULAR OF A TURBOMACHINE, AND ASSOCIATED SPEED REDUCER AND TURBOMACHINE

(30) Priorité: 16.01.2018 FR 1850311
(43) Date de publication de la demande: 25.11.2020
(73) Titulaire: Safran Transmission Systems, 92700 Colombes (FR)
(72) Inventeur: CHARRIER, Mathieu Jean, 77550 Moissy Cramayel (FR); MORELLI, Boris Pierre Marcel, 77550 Moissy Cramayel (FR); PENNACINO, Antoine, 77550 Moissy Cramayel (FR)
(74) Mandataire: Cabinet Camus Lebkiri
(86) Numéro de dépôt international: PCT/FR2019/050044
(87) Numéro de publication internationale: WO 2019/141920

(56) Documents cités:
- EP-A1- 2 559 914
- EP-A1- 2 719 927
- EP-A2- 1 731 726
- EP-A2- 2 898 202
- US-A1- 2008 190 700
- US-A1- 2011 048 856
- US-A1- 2015 065 285

## Description

### DOMAINE DE L'INVENTION

L'invention se rapporte au domaine général des réducteurs de vitesse utilisés notamment dans une turbomachine.

L'invention concerne plus particulièrement un collecteur d'huile pour réducteur de vitesse. L'invention se rapporte également à un réducteur de vitesse comportant le collecteur d'huile ainsi qu'à une turbomachine comportant un tel réducteur.

### ARRIERE-PLAN TECHNOLOGIQUE DE L'INVENTION

Les turbomachines actuelles, notamment les turbomachines comportant une ou plusieurs hélices soufflant un flux secondaire, comprennent un système de transmission, appelé réducteur, pour entraîner cette ou ces hélices à la bonne vitesse de rotation à partir de l'arbre de la turbine de puissance du corps primaire du moteur.

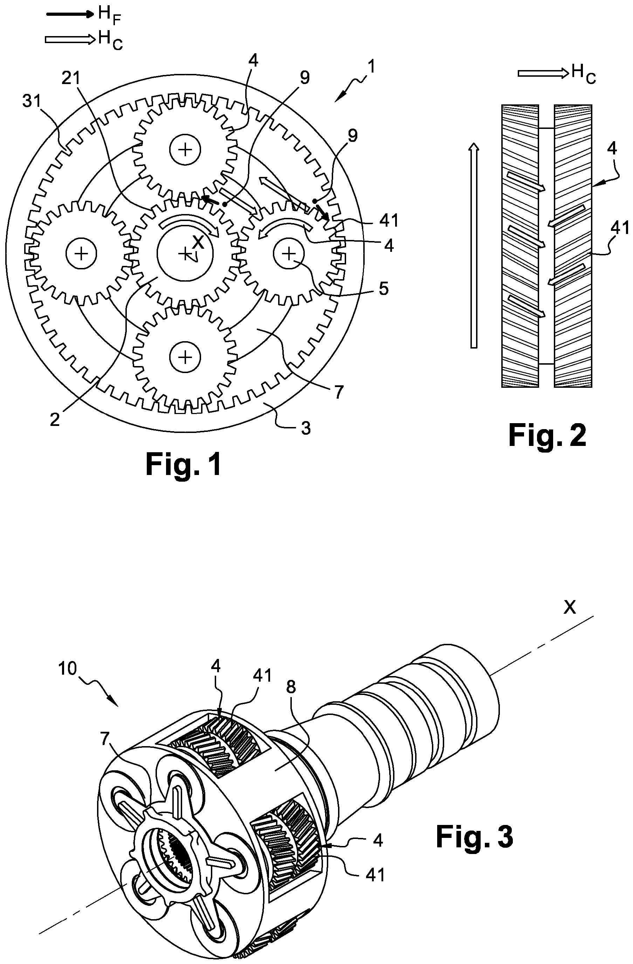

La figure 1 représente une vue en coupe transversale d'un réducteur de vitesse selon l'art antérieur.

En référence à la figure 1, le réducteur de vitesse 1 comporte un pignon planétaire 2 entrainé par un arbre d'entrée (non représenté) mobile en rotation autour d'un axe X ainsi qu'une couronne 3 coaxiale au pignon planétaire 2. Le réducteur 1 comporte, en outre, des pignons satellites 4 engrenés à la fois avec le pignon planétaire 2 et avec la couronne 3. Les pignons satellites 4 sont montés rotatifs sur des pivots 5 d'un porte-satellites 7 du réducteur 1.

Il existe deux types de configurations de réducteur :
- les réducteurs dits « planétaires » dans lesquels le porte-satellites 7 est fixe et la couronne 3 est libre en rotation ;
- les réducteurs épicycloïdaux dans lesquels la couronne 3 est fixe et le porte-satellites 7 est libre en rotation.

La lubrification des dentures du pignon planétaire 2, de la couronne 3 et des pignons satellites 4 est réalisée par des moyens de lubrification 9. Les moyens de lubrification 9 comportent notamment des canaux de distribution d'huile (non représentés) chargés d'acheminer de l'huile froide H_{F} provenant d'un réservoir d'huile (non représenté) vers des zones d'engrènement du réducteur 1.

Le fonctionnement des réducteurs, en particulier sur des turbomachines avec hélice de soufflante à fort taux de dilution, nécessite un débit d'huile particulièrement important, de l'ordre de 6000 à 7000 litres par heure au décollage, pour assurer la lubrification et le refroidissement des pignons et des paliers et ainsi d'assurer le bon fonctionnement du réducteur et la sécurité de la turbomachine.

Cependant, la ventilation des pignons est à l'origine d'un échauffement de l'huile H_{F} dû au phénomène de couple résistif appliqué au réducteur 1 par l'air. L'énergie est alors dissipée par mise en mouvement de l'air ce qui conduit à une augmentation de la température dans le réducteur 1 pouvant nuire à la sureté du réducteur 1 et donc de la turbomachine.

Une solution consiste à positionner des conduits d'évacuation à la périphérie du réducteur 1 de manière à récupérer l'huile chaude Hc projetée radialement vers l'extérieur par les pignons satellites 4. Cette solution est particulièrement intéressante pour les réducteurs à train épicycloïdal car ils génèrent un champ centrifuge projetant l'huile chaude Hc radialement naturellement vers l'extérieur du réducteur 1.

Dans le cas des réducteurs planétaires, comme on peut le voir sur la figure 2, l'huile chaude Hc a tendance à être dirigée vers une zone interne du réducteur 1, notamment dans la zone délimitée par deux pignons satellites 4 adjacents, ce qui complexifie l'évacuation de l'huile Hc.

Aussi, pour les réducteurs planétaires, une solution consiste à éliminer l'huile Hc en utilisant des collecteurs d'huile positionnés entre deux pignons satellites adjacents de manière à récupérer un maximum d'huile Hc. L'huile chaude Hc ainsi récupérée est ensuite évacuée axialement vers l'extérieur du réducteur 1.

EP2719927 A1 divulgue un exemple connu de réducteur planétaire équipé de collecteurs d'huile.

Toutefois, les collecteurs d'huile selon l'art antérieur ne sont pas satisfaisants en termes de masse et d'efficacité.

### RESUME DE L'INVENTION

Dans ce contexte, l'invention vise à remédier à tout ou partie des inconvénients de l'état de la technique identifiés ci-dessus, notamment en proposant une solution permettant d'évacuer efficacement l'huile expulsée par les pignons du réducteur tout en limitant la masse du réducteur.

Ainsi, selon un premier aspect, l'invention se rapporte à un collecteur d'huile pour réducteur de vitesse notamment de turbomachine.

Le collecteur d'huile selon le premier aspect présente des faces latérales et comporte :
- une première entrée, ménagée dans une première face latérale, adaptée pour recevoir de l'huile,
- une sortie, ménagée dans une troisième face latérale, adaptée pour évacuer ladite huile, ladite troisième face latérale étant adjacente à la première face latérale,
- une structure lattice positionnée à l'intérieur du collecteur d'huile et communiquant avec ladite première entrée et avec ladite sortie, ladite structure lattice comportant des pores dont le diamètre est hétérogène pour assurer le piégeage de l'huile en provenance de la première entrée et pour assurer l'évacuation de ladite huile à travers la sortie par gravité.

On entend par « pignons », tous types de pièces mécaniques dentées et destinées à coopérer avec une ou plusieurs pièces dentées afin de transmettre un mouvement de rotation.

En outre, on entend par « structure lattice », un métal poreux. En d'autres termes, le matériau utilisé ne représente que la moitié du volume total, voire moins.

L'invention selon le premier aspect permet de résoudre les problèmes préalablement cités.

Le collecteur d'huile selon l'invention permet de piéger et d'évacuer efficacement l'huile lorsque le collecteur est positionné dans un réducteur de vitesse, en particulier un réducteur planétaire. Pour ce faire, il suffit de positionner le collecteur d'huile à proximité d'un pignon satellite du réducteur de sorte que la première entrée du collecteur d'huile soit en regard de la denture périphérique d'un pignon satellite du réducteur.

Les gouttelettes d'huile expulsées radialement par le pignon satellite sont alors piégées dans la structure lattice du collecteur puis évacuées axialement à travers la sortie par gravité et cela, grâce à la variation du diamètre des pores dans la structure lattice. En effet, le diamètre des pores de la structure lattice varie selon la position des pores dans le collecteur d'huile. Ainsi, le diamètre des pores situés à proximité de la première entrée est choisi de manière à optimiser le piégeage de l'huile en créant une forte perte de charges due aux frottements de l'huile lors de son passage dans la structure lattice. Une fois piégées à proximité de la première entrée, les gouttelettes d'huile s'accumulent dans la structure lattice et se dirigent vers la sortie sous l'effet de la gravité. Le diamètre des pores à proximité de la sortie, différent du diamètre des pores à proximité de la première entrée, permet d'optimiser l'évacuation de l'huile.

L'huile pénétrant radialement dans la structure lattice change donc de direction ce qui permet de récupérer l'huile axialement et ainsi d'éviter qu'elle ne s'accumule dans le réducteur. Avantageusement, un canal d'évacuation est positionné axialement à la sortie du collecteur afin de récupérer l'huile évacuée. L'huile pourra alors être acheminée vers une unité de traitement de l'huile qui assure la filtration et le refroidissement de l'huile. L'huile ainsi traitée est réintroduite dans le réservoir d'huile d'où provient l'huile froide servant à lubrifier et à refroidir les pignons du réducteur.

Par ailleurs, l'utilisation de la structure lattice présente de nombreux avantages par rapport aux collecteurs d'huile selon l'art antérieur, notamment l'évidente économie de masse et de matière. De plus, la fabrication d'un tel collecteur est simple et peu couteuse.

En outre, la structure lattice peut être fabriquée par une méthode additive ce qui permet d'adapter le dimensionnement de la structure lattice à la perte de charges souhaitée.

Le collecteur d'huile selon le premier aspect de l'invention peut également présenter une ou plusieurs des caractéristiques ci-dessous, considérées individuellement ou selon toutes les combinaisons techniquement possibles.

Selon un mode de réalisation non-limitatif, la structure lattice comporte des pores présentant un diamètre compris dans l'intervalle [1mm ; 10mm].

Selon un mode de réalisation non-limitatif, le diamètre des pores de la structure lattice est plus grand à proximité de la première entrée qu'à proximité de la sortie.

Selon un mode de réalisation non-limitatif, le diamètre des pores à proximité de la première entrée est compris dans l'intervalle [5mm ; 10mm]. ,

Selon un mode de réalisation non-limitatif, le diamètre des pores à proximité de la sortie est compris dans l'intervalle [1mm ; 5mm].

Selon un mode de réalisation non-limitatif, le collecteur d'huile comporte une seconde entrée ménagée dans une deuxième face latérale opposée à la première face latérale et adaptée pour recevoir de l'huile, la structure lattice communiquant avec la seconde entrée et étant configurée pour assurer le piégeage de l'huile en provenance de la seconde entrée et l'évacuation de ladite huile à travers la sortie par gravité.

Selon un mode de réalisation non limitatif, le diamètre des pores à proximité de la première entrée est compris dans l'intervalle [5mm, 10mm].

Par ailleurs, selon un second aspect, l'invention se rapporte à un réducteur de vitesse notamment de turbomachine comportant :
- un pignon planétaire mobile en rotation autour d'un axe,
- un premier pignon satellite et un deuxième pignon satellite positionnés autour du pignon planétaire, chaque pignon satellite présentant une denture périphérique et étant engrené avec le pignon planétaire,
- des moyens de lubrification par projection d'huile sur le pignon planétaire et les pignons satellites,
- un collecteur d'huile positionné entre le premier pignon satellite et le deuxième pignon satellite,
- un porte-satellite assurant le montage des pignons satellites et du collecteur d'huile autour du pignon planétaire,
- un collecteur d'huile selon le premier aspect, la première entrée étant en regard de la denture périphérique du premier pignon satellite pour recevoir l'huile expulsée par le premier pignon satellite, la sortie assurant l'évacuation de ladite huile expulsée selon la direction axiale.

On entend par « denture périphérique», l'ensemble des dents d'un pignon.

Le réducteur de vitesse selon le second aspect de l'invention peut également présenter une ou plusieurs des caractéristiques ci-dessous, considérées individuellement ou selon toutes les combinaisons techniquement possibles Selon un mode de réalisation non-limitatif, la seconde entrée est en regard de la denture périphérique du deuxième pignon satellite pour recevoir l'huile expulsée par le deuxième pignon satellite.

Selon un mode de réalisation non-limitatif, le réducteur comporte au moins un moyen de fixation adapté pour assurer le montage du collecteur d'huile sur le réducteur, ledit au moins un moyen de fixation assurant le positionnement des moyens de lubrification.

Selon un mode de réalisation non-limitatif, le réducteur comporte des moyens de protection de l'huile projetée par les moyens de lubrification.

Selon un mode de réalisation non-limitatif, le réducteur est planétaire.

Enfin, l'invention se rapporte selon un troisième aspect, à une turbomachine comportant un réducteur de vitesse selon le second aspect de l'invention.

### BREVE DESCRIPTION DES FIGURES

D'autres caractéristiques et avantages de l'invention ressortiront à la lecture de la description qui suit, en référence aux figures annexées, qui illustrent :
- à la figure 1, une vue en coupe transversale d'un réducteur de vitesse selon l'art antérieur ;
- à la figure 2, le sens de circulation de l'huile au niveau de la denture périphérique d'un pignon satellite du réducteur de la figure 1 ;
- à la figure 3, une vue en perspective d'une partie d'un réducteur de vitesse ;
- à la figure 4, une vue en coupe transversale d'un réducteur de vitesse selon un mode de réalisation de l'invention ;
- à la figure 5, une vue en perspective d'un collecteur d'huile selon un mode de réalisation de l'invention.

### DESCRIPTION DETAILLEE D'AU MOINS UN MODE DE REALISATION

Dans la suite de la description, on désignera par « huile froide H_{F»}, l'huile provenant des moyens de lubrification 9 et n'ayant pas encore servi à lubrifier les pignons du réducteur, par opposition avec « huile chaude H_{C} » qui correspond à l'huile usagée.

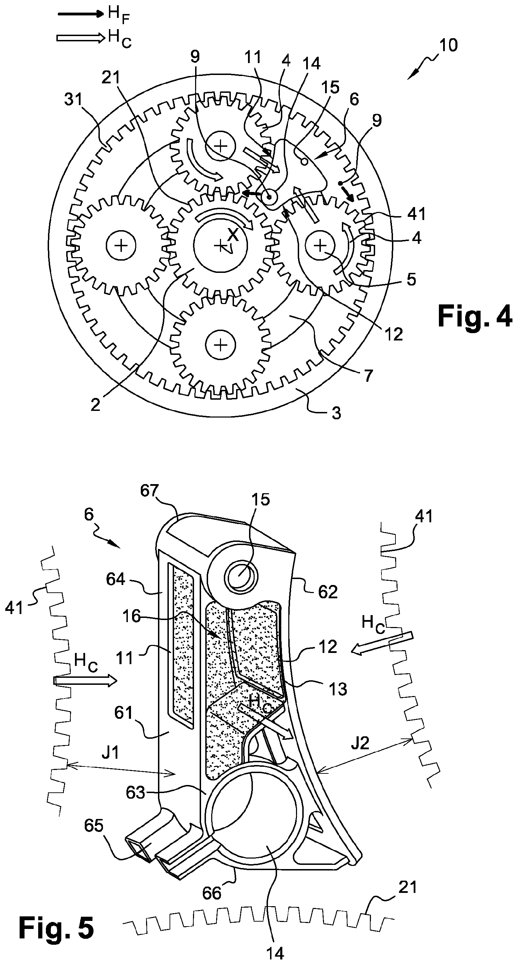

Les figures 3 et 4 illustrent schématiquement la structure d'un réducteur de vitesse 10 selon l'invention.

En référence aux figures 3 et 4, le réducteur de vitesse 10 comporte, de la même manière que le réducteur de vitesse 1 selon l'art antérieur, un pignon planétaire 2 (également appelé soleil) et une couronne 3 coaxiaux. Le pignon planétaire 2 est mobile en rotation autour d'un axe X. La couronne 3 est fixe lorsque le réducteur est à train épicycloïdal et mobile en rotation autour de l'axe X lorsque le réducteur est planétaire. On note que sur la figure 3, le réducteur de vitesse n'est représenté que partiellement, la couronne 3 n'étant pas représentée.

De plus, le réducteur 10 comporte des pignons satellites 4 montés de façon mobile en rotation sur des pivots 5 d'un porte-satellites 7. Chaque pignon satellite 4 est engrené à la fois avec le pignon planétaire 2 et avec la couronne 3. Plus précisément, chaque pignon satellite 4 comporte une denture périphérique 41 en prise avec une denture interne 31 de la couronne 3 et avec une denture périphérique 21 du pignon planétaire 2. Par ailleurs, selon le mode de réalisation de la figure 3, les pignons satellites 4 sont supportés par une cage 8, qui peut elle-même être supportée par un porte-cage (non représenté). On note que le porte-satellite 7 est mobile lorsque le réducteur est à train épicycloïdal et fixe lorsque le réducteur est planétaire.

Afin de refroidir et lubrifier le réducteur de vitesse 10, il est connu d'utiliser des moyens de lubrification 9 qui permettent la projection d'huile froide H_{F} au niveau de zones d'engrènement des pignons satellites 4 avec le pignon planétaire 2 et avec la couronne 3. Pour ce faire, les moyens de lubrification 9 comportent des moyens de projection d'huile (non représentés) également appelés « gicleurs » qui sont reliés à des canaux de distribution d'huile (non représentés) fixés au porte-satellites 7. Les canaux de distribution d'huile sont donc mobiles dans le cas d'un réducteur à train épicycloïdal et fixes dans le cas d'un réducteur planétaire. Par ailleurs, les gicleurs sont agencés à proximité des zones d'engrènement de manière à assurer la lubrification et le refroidissement du pignon planétaire 2, des pignons satellites 4 et de la couronne 4 de manière optimale. En particulier, les gicleurs sont orientés dans le réducteur 10 de manière à projeter radialement des gouttelettes d'huile froide H_{F} afin qu'elles atteignent les dentures des pignons. Les canaux de distribution d'huile puisent de l'huile froide H_{F} depuis un réservoir d'huile (non représenté) positionné à l'extérieur du réducteur 10.

En outre, à la différence du réducteur de vitesse 1 de la figure 1, le réducteur de vitesse 10 selon l'invention comporte un collecteur d'huile 6. Le collecteur d'huile 6 selon l'invention assure une évacuation axiale de l'huile chaude Hc expulsée radialement par les pignons satellite 4.

Les figures 4 et 5 représentent le collecteur d'huile 6 selon un mode de réalisation de l'invention.

Le collecteur d'huile 6 est fixé au porte-satellites 7, il est donc fixe dans le cas d'un réducteur planétaire et mobile en rotation dans le cas d'un réducteur à train épicycloïdal.

En référence à la figure 4, le collecteur d'huile 4 a globalement la forme d'un prisme. Le collecteur d'huile 6 comporte ainsi une première face latérale 61 et une seconde face latérale 62. La première face latérale 61 et la seconde face latérale 62 sont adaptées pour être positionnées en regard de la denture périphérique 41, respectivement, du premier pignon satellite 4 et du deuxième pignon satellite 4. Avantageusement, la première face latérale 61 et la seconde face latérale 62 sont concaves de manière à épouser la forme de la denture périphérique 41 des pignons satellites 4 qui est globalement circulaire. De plus, afin d'optimiser la récupération de l'huile chaude Hc par le collecteur 6, le jeu J1 entre la première face latérale 61 et la denture périphérique 41 du premier pignon satellite 4 et le jeu J2 entre la seconde face latérale 62 et la denture périphérique 41 du deuxième pignon satellite 4 sont minimisés. Avantageusement, les jeux J1 et J2 sont compris dans l'intervalle [1mm, 10mm]. Le collecteur d'huile 6 comporte également une troisième face latérale 63 et une quatrième face latérale 64 de forme globalement trapézoïdale. Avantageusement, la troisième face latérale 63 et la quatrième face latérale 64 sont globalement planes. Enfin, le collecteur d'huile 6 comporte une face interne 66 et une face externe 67. Les termes « interne » et « externe » sont utilisés en référence à une direction radiale de sorte que la face interne d'un élément est plus proche de l'axe X que la face externe du même élément. La face interne 66 et la face externe 67 sont adaptées pour être positionnées en regard, respectivement, de la denture périphérique 21 du pignon planétaire 2 et de la denture interne 31 de la couronne 3. Ainsi, selon le mode de réalisation présenté à la figure 4, la face interne 66 du collecteur 6 est concave tandis que la face externe 67 est convexe de manière à épouser, respectivement, la denture périphérique 21 du pignon planétaire 2 et la denture interne 31 de la couronne 3. Par ailleurs, selon un mode de réalisation, le collecteur d'huile 6 est réalisé en alliage d'aluminium.

Par ailleurs, en référence à la figure 5, le collecteur d'huile 6 comporte :
- une première entrée 11,
- une seconde entrée 12,
- une sortie 13,
- une structure lattice 16,
- des moyens de fixation 14, 15,
- des moyens de protection 65.

La première entrée 11 est ménagée dans la première face latérale 61 du collecteur d'huile 6. Comme on peut le voir sur la figure 4, lorsque le collecteur 6 est monté dans le réducteur 10, la première entrée 11 est en regard de la denture périphérique 41 du premier pignon satellite 4 de manière à recevoir de l'huile Hc projetée par le premier pignon satellite 4. Ainsi, la première entrée 11 est construite et agencée pour recevoir un maximum d'huile Hc en provenance du premier pignon satellite 4. Avantageusement, la première entrée 11 représente entre 33% et 99% de la première face latérale 61.

La deuxième entrée 12 est ménagée dans la seconde face latérale 62 du collecteur d'huile 6. Comme on peut le voir sur la figure 4, lorsque le collecteur 6 est monté dans le réducteur 10, la seconde entrée 12 est en regard de la denture périphérique 41 du deuxième pignon satellite 4 de manière à recevoir de l'huile Hc projetée par le deuxième pignon satellite 4. Ainsi, la seconde entrée 12 est construite et agencée pour recevoir le maximum d'huile Hc en provenance du deuxième pignon satellite 4. Avantageusement, la première entrée 11 représente entre 33 et 99 % de la seconde face latérale 62.

La présence de deux entrées 11 et 12 permet d'optimiser le piégeage d'huile Hc et ainsi son évacuation. Dans un autre mode de réalisation non représenté, le collecteur d'huile 6 comporte une seule entrée.

La sortie 13 est ménagée dans la troisième face latérale 63 du collecteur d'huile 6. On note que la sortie 13 ne traverse pas la quatrième face latérale 64. De plus, la sortie 13 communique avec la première entrée 11 et la seconde entrée 12. La sortie 13 est construite et agencée pour évacuer un maximum d'huile Hc en provenance de la première entrée 11 et de la seconde entrée 12. Avantageusement, la sortie 13 représente entre 66 et 99% de la troisième face latérale 63.

La structure lattice 16 est positionnée à l'intérieur du collecteur d'huile 6 de manière à communiquer avec la première entrée 11, la seconde entrée 12 ainsi qu'avec la sortie 13. Par ailleurs, la structure lattice 16 comporte des pores dont le diamètre est choisi de manière à optimiser le piégeage puis l'évacuation de l'huile Hc. Ainsi, le diamètre des pores de la structure lattice 16 est compris dans l'intervalle [1mm, 10mm].

Avantageusement, le diamètre des pores est hétérogène dans la structure lattice 16. En d'autres termes, dans certaines zones de la structure lattice 16, le diamètre des pores est supérieur au diamètre des pores dans d'autres zones de la structure 16. Avantageusement, le diamètre des pores situés à proximité de la première entrée 11 est supérieur au diamètre des pores situés à proximité de la sortie 13. Ainsi, selon un mode de réalisation non limitatif, le diamètre des pores à proximité de la première entrée 11 est compris dans l'intervalle [5mm, 10mm]. En outre, avantageusement, le diamètre des pores situés à proximité de la seconde entrée 12 est également supérieur au diamètre des pores situés à proximité de la sortie 13. Ainsi, selon un mode de réalisation non limitatif, le diamètre des pores à proximité de la seconde entrée 12 est compris dans l'intervalle [5mm, 10mm]. Enfin, selon un mode de réalisation non limitatif, le diamètre des pores à proximité de la sortie 13 est compris dans l'intervalle [1mm, 10mm].

Les moyens de fixation 14 et 15 assurent la fixation du collecteur d'huile 6 dans le réducteur 10. Selon le mode de réalisation de la figure 5, les moyens de fixation 14 et 16 sont formés par des orifices ménagés dans la troisième face latérale 63 du collecteur d'huile 6 et débouchant dans la quatrième face latérale 64 du collecteur d'huile 6. Avantageusement, un premier moyen de fixation 14 est adapté pour le positionnement du collecteur d'huile 6 dans le réducteur 10 par centrage. De plus, un second moyen de fixation 15 maintient par exemple en position le collecteur d'huile 6 dans le réducteur 10 par serrage au moyen d'une vis. Chaque orifice est adapté pour coopérer avec un élément de fixation (non représenté), par exemple une vis, pour fixer le collecteur d'huile 6 sur le porte-satellite 7. Avantageusement, le premier moyen de fixation 14 assure également le positionnement des moyens de lubrification 9. Plus précisément, l'orifice formant le premier moyen de fixation 14 assure le passage du gicleur.

Par ailleurs, les moyens de protection 65 de l'huile froide H_{F} assurent la protection de l'huile froide H_{F} projetée par les moyens de lubrification 9. Pour ce faire, les moyens de protection 65 sont formés par des tubes en saillie par rapport à la première face latérale 61 du collecteur d'huile 6. Les tubes débouchent à l'extérieur du collecteur d'huile 6 ainsi que dans le premier moyen de fixation 14 afin de recevoir l'huile froide H_{F} provenant du gicleur et l'acheminer vers une zone d'engrènement du réducteur 10. Ainsi, positionnée, l'huile froide H_{F} ne risque pas de s'altérer avant d'être projetée sur les pignons du réducteur 10.

En outre, le collecteur d'huile 6 est avantageusement fabriqué par une méthode additive. Les surfaces fonctionnelles peuvent ensuite être reprises par une méthode d'usinage « classique ». Par ailleurs, selon un mode de réalisation non limitatif, la structure lattice 16 est également fabriquée par une méthode additive. Selon un mode de réalisation non limitatuf, la structure est avantageusement réalisée en alliage d'aluminium.

Bien entendu, la présente invention n'est pas limitée aux modes de réalisation décrits à titre d'exemple; ainsi, le nombre de pignons satellites, le nombre de collecteurs d'huile peut varier ainsi que la forme des collecteurs d'huile etc. L'invention est seulement limitée par les revendications.

## Revendications

1. Collecteur d'huile (6) pour réducteur de vitesse (10) notamment de turbomachine, ledit collecteur d'huile (6) présentant des faces latérales (61, 62, 63, 64) et comportant :
- une première entrée (11), ménagée dans une première face latérale (61), adaptée pour recevoir de l'huile (Hc),
- une sortie (13), ménagée dans une troisième face latérale (63), adaptée pour évacuer ladite huile (Hc), ladite troisième face latérale (63) étant adjacente à la première face latérale (61),
le collecteur d'huile (6) étant **caractérisé en ce qu'**il comporte une structure lattice (16), positionnée à l'intérieur du collecteur d'huile (6) et communiquant avec ladite première entrée (11) et avec ladite sortie (13), ladite structure lattice (16) comportant des pores dont le diamètre est hétérogène pour assurer le piégeage de l'huile (Hc) en provenance de la première entrée (11) et pour assurer l'évacuation de ladite huile (Hc) à travers la sortie (13) par gravité.

2. Collecteur d'huile (6) selon la revendication précédente, **caractérisé en ce que** le diamètre des pores de la structure lattice (16) est compris dans l'intervalle [1mm, 10mm].

3. Collecteur d'huile (6) selon l'une des revendications précédentes, **caractérisé en ce que** le diamètre des pores de la structure lattice (16) est plus grand à proximité de la première entrée (11) qu'à proximité de la sortie (13).

4. Collecteur d'huile (6) selon la revendication précédente, **caractérisé en ce que** :
- le diamètre des pores à proximité de la première entrée (11) est compris dans l'intervalle [5mm, 10mm]. ,
- le diamètre des pores à proximité de la sortie (13) est compris dans l'intervalle [1mm, 5mm].

5. Collecteur d'huile (6) selon l'une des revendications précédentes, **caractérisé en ce qu'**il comporte une seconde entrée (12) ménagée dans une deuxième face latérale (62) opposée à la première face latérale (61) et adaptée pour recevoir de l'huile (Hc), la structure lattice (16) communiquant avec la seconde entrée (11) et étant configurée pour assurer le piégeage de l'huile (Hc) en provenance de la seconde entrée (11) et l'évacuation de ladite huile (Hc) à travers la sortie (13) par gravité.

6. Réducteur de vitesse (10) notamment pour turbomachine comportant :
- un pignon planétaire (2), mobile en rotation autour d'un axe (X),
- un premier pignon satellite (4) et un deuxième pignon satellite (4) positionnés autour du pignon planétaire (2), chaque pignon satellite (4) présentant une denture périphérique (41) et étant engrené avec le pignon planétaire (2),
- des moyens de lubrification (9) par projection d'huile (H_{F}) sur le pignon planétaire (2) et les pignons satellites (4),
- un collecteur d'huile (6) positionné entre le premier pignon satellite (4) et le deuxième pignon satellite (4),
- un porte-satellite (7) assurant le montage des pignons satellites (4) et du collecteur d'huile (6) autour du pignon planétaire (2),
le réducteur (10) étant **caractérisé en ce qu'**il comporte le collecteur d'huile (6) selon l'une des revendications 1 à 5 :
- la première entrée (11) étant en regard de la denture périphérique (41) du premier pignon satellite (4) pour recevoir l'huile (Hc) expulsée par le premier pignon satellite (4),
- la sortie (13) assurant l'évacuation de ladite huile (Hc) selon la direction axiale (X).

7. Réducteur (10) selon la revendication précédente, **caractérisé en ce que** la seconde entrée (12) est en regard de la denture périphérique (41) du deuxième pignon satellite (4) pour recevoir l'huile (Hc) expulsée par le deuxième pignon satellite (4).

8. Réducteur (10) selon la revendication précédente, **caractérisé en ce qu'**il comporte au moins un moyen de fixation (14) adapté pour assurer le montage du collecteur d'huile (6) sur le réducteur (6), ledit au moins un moyen de fixation (14) assurant le positionnement des moyens de lubrification (9).

9. Réducteur (10) selon l'une des revendications 6 à 8, **caractérisé en ce qu'**il comporte des moyens de protection (65) de l'huile (H_{F}) projetée par les moyens de lubrification (9).

10. Réducteur (10) selon l'une des revendications 6 à 9, **caractérisé en ce qu'**il est planétaire.

11. Turbomachine **caractérisée en ce qu'**elle comporte un réducteur de vitesse (10) selon l'une des revendications 6 à 10.

## Patentansprüche

1. Ölabscheider (6) für Untersetzungsgetriebe (10), insbesondere einer Turbomaschine, wobei der genannte Ölabscheider (6) Seitenflächen (61, 62, 63, 64) aufweist und umfasst:
- einen ersten Eingang (11), der in einer ersten Seitenfläche (61) ausgespart ist, die geeignet ist, Öl (Hc) aufzunehmen;
- einen Ausgang (13), der in einer dritten Seitenfläche (63) ausgespart ist, die geeignet ist, um das genannte Öl (Hc) auszutragen, wobei die genannte dritte Seitenfläche (63) an der ersten Seitenfläche (61) anliegend ist,
wobei der Ölabscheider (6) **dadurch gekennzeichnet ist, dass** er eine Gitterstruktur (16) umfasst, die im Innern des Ölabscheiders (6) angeordnet ist und mit dem genannten ersten Eingang (11) und mit dem genannten Ausgang (13) in Verbindung steht, wobei die genannte Gitterstruktur (16) Poren umfasst, deren Durchmesser heterogen ist, um den Einschluss des aus dem ersten Eingang (11) stammenden Öls (Hc) zu gewährleisten und um den Austrag des genannten Öls (Hc) durch den Ausgang (13) per Schwerkraft zu gewährleisten.

2. Ölabscheider (6) gemäß dem voranstehenden Anspruch, **dadurch gekennzeichnet, dass** der Durchmesser der Poren der Gitterstruktur (16) in dem Intervall [1 mm, 10 mm] inbegriffen ist.

3. Ölabscheider (6) gemäß einem der voranstehenden Ansprüche, **dadurch gekennzeichnet, dass** der Durchmesser der Poren der Gitterstruktur (16) in der Nähe des ersten Eingangs (11) größer ist als in der Nähe des Ausgangs (13).

4. Ölabscheider (6) gemäß dem voranstehenden Anspruch, **dadurch gekennzeichnet, dass**:
- der Durchmesser der Poren in der Nähe des ersten Eingangs (11) in dem Intervall [5 mm, 10 mm] inbegriffen ist,
- der Durchmesser der Poren in der Nähe des Ausgangs (13) in dem Intervall [1 mm, 5 mm] inbegriffen ist.

5. Ölabscheider (6) gemäß einem der voranstehenden Ansprüche, **dadurch gekennzeichnet, dass** er einen zweiten Eingang (12) umfasst, der in einer zweiten Seitenfläche (62) ausgespart ist, die der ersten Seitenfläche (61) gegenüber angeordnet und geeignet ist, um Öl (Hc) aufzunehmen, wobei die Gitterstruktur (16) mit dem zweiten Eingang (11) in Verbindung steht und ausgestaltet ist, um das Einschließen des aus dem zweiten Eingang (11) stammenden Öls (Hc) und das Austragen des genannten Öls (Hc) durch den Ausgang (13) per Schwerkraft zu gewährleisten.

6. Untersetzungsgetriebe (10), insbesondere für Turbomaschine, umfassend:
- ein in Rotation um eine Achse (X) mobiles Umlaufrad (2),
- ein erstes Planetenrad (4) und ein zweites Planetenrad (4), die um das Umlaufrad (2) angeordnet sind, wobei jedes Planetenrad (4) eine umlaufende Zahnung (41) aufweist und mit dem Umlaufrad (2) eingegriffen ist,
- Schmiermittel (9) per Spritzen von Öl (H_{F}) auf das Umlaufrad (2) und die Planetenräder (4),
- einen Ölabscheider (6), der zwischen dem ersten Planetenrad (4) und dem zweiten Planetenrad (4) angeordnet ist,
- einen Planetenträger (7), der die Montage der Planetenräder (4) und des Ölabscheiders (6) um das Umlaufrad (2) gewährleistet,
wobei das Untersetzungsgetriebe (10) **dadurch gekennzeichnet ist, dass** es den Ölabscheider (6) gemäß einem der Ansprüche 1 bis 5 umfasst:
- wobei der erste Eingang (11) gegenüber der umlaufenden Zahnung (41) des ersten Planetenrades (4) ist, um das von dem ersten Planetenrad (4) ausgestoßene Öl (Hc) aufzunehmen,
- wobei der Ausgang (13) den Austrag des genannten Öls (Hc) gemäß der axialen Richtung (X) gewährleistet.

7. Untersetzungsgetriebe (10) gemäß dem voranstehenden Anspruch, **dadurch gekennzeichnet, dass** der zweite Eingang (12) gegenüber der umlaufenden Zahnung (41) des zweiten Planetenrades (4) angeordnet ist, um das von dem zweiten Planetenrad (4) ausgestoßene Öl (Hc) aufzunehmen.

8. Untersetzungsgetriebe (10) gemäß dem voranstehenden Anspruch, **dadurch gekennzeichnet, dass** es wenigstens ein Befestigungsmittel (14) umfasst, das geeignet ist, um die Montage des Ölabscheiders (6) auf dem Untersetzungsgetriebe (6) zu gewährleisten, wobei das genannte wenigstens eine Befestigungsmittel (14) die Positionierung der Schmiermittel (9) gewährleistet.

9. Untersetzungsgetriebe (10) gemäß einem der Ansprüche 6 bis 8, **dadurch gekennzeichnet, dass** es Schutzmittel (65) des Öls (H_{F}) umfasst, das von den Schmiermitteln (9) verspritzt wird.

10. Untersetzungsgetriebe (10) gemäß einem der Ansprüche 6 bis 9, **dadurch gekennzeichnet, dass** es planetar ist.

11. Turbomaschine, **dadurch gekennzeichnet, dass** sie ein Untersetzungsgetriebe (10) gemäß einem der Ansprüche 6 bis 10 umfasst.

## Claims

1. An oil collector (6) for a speed reducer (10) especially of a turbomachine, said oil collector (6) having side faces (61, 62, 63, 64) and including:
- a first inlet (11), provided in a first side face (61), adapted to receive oil (Hc);
- an outlet (13), provided in a third side face (63), adapted to discharge said oil (Hc), said third side face (63) being adjacent to the first side face (61),
the oil collector (6) being **characterised in that** it includes a lattice structure (16), positioned inside the oil collector (6) and communicating with said first inlet (11) and with said outlet (13), said lattice structure (16) including pores the diameter of which is heterogeneous to ensure trapping of oil (Hc) from the first inlet (11) and to ensure discharge of said oil (Hc) through the outlet (13) by gravity.

2. The oil collector (6) according to the preceding claim, **characterised in that** the diameter of the pores of the lattice structure (16) is in the interval [1 mm, 10 mm].

3. The oil collector (6) according to one of the preceding claims, **characterised in that** the diameter of the pores of the lattice structure (16) is larger in proximity to the first inlet (11) than in proximity to the outlet (13).

4. The oil collector (6) according to the preceding claim, **characterised in that**:
- the diameter of the pores in proximity to the first inlet (11) is in the interval [5 mm, 10 mm],
- the diameter of the pores in proximity to the outlet (13) is in the interval [1 mm, 5 mm].

5. The oil collector (6) according to one of the preceding claims, **characterised in that** it includes a second inlet (12) provided in a second side face (62) opposite to the first side face (61) and adapted to receive oil (Hc), the lattice structure (16) communicating with the second inlet (11) and being configured to ensure trapping of oil (Hc) from the second inlet (11) and discharge of said oil (Hc) through the outlet (13) by gravity.

6. A speed reducer (10) especially for a turbomachine including:
- a planetary gear (2), rotatably movable around an axis (X),
- a first satellite gear (4) and a second satellite gear (4) positioned around the planetary gear (2), each satellite gear (4) having peripheral teeth (41) and being meshed with the planetary gear (2),
- lubrication means (9) by projecting oil (H_{F}) onto the planetary gear (2) and the satellite gears (4),
- an oil collector (6) positioned between the first satellite gear (4) and the second satellite gear (4),
- a satellite carrier (7) ensuring mounting of the satellite gears (4) and oil collector (6) around the planetary gear (2),
the reducer (10) being **characterised in that** it includes the oil collector (6) according to one of claims 1 to 5:
- the first inlet (11) facing the peripheral teeth (41) of the first satellite gear (4) to receive oil (Hc) expelled by the first satellite gear (4),
- the outlet (13) ensuring discharge of said oil (Hc) along the axial direction (X).

7. The reducer (10) according to the preceding claim, **characterised in that** the second inlet (12) faces the peripheral teeth (41) of the second satellite gear (4) to receive oil (Hc) expelled by the second satellite gear (4).

8. The reducer (10) according to the preceding claim, **characterised in that** it includes at least one attaching means (14) adapted to ensure mounting of the oil collector (6) onto the reducer (6), said at least one attaching means (14) ensuring positioning of the lubrication means (9).

9. The reducer (10) according to one of claims 6-8, **characterised in that** it includes means (65) of protecting the oil (H_{F}) projected by the lubrication means (9).

10. The reducer (10) according to one of claims 6-9, **characterised in that** it is a planetary reducer.

11. A turbomachine **characterised in that** it includes a speed reducer (10) according to one of claims 6-10.
